Europäisches Patentamt

European Patent Office

Office européen des brevets

(11) Publication number: **0 141 439**
**B1**

(12) **EUROPEAN PATENT SPECIFICATION**

(45) Date of publication of patent specification: **06.04.88**

(21) Application number: **84201249.4**

(22) Date of filing: **29.08.84**

(51) Int. Cl.⁴: **B 09 B 3/00**

(54) Process for the disposal of domestic garbage.

(30) Priority: **29.08.83 NL 8303004**

(43) Date of publication of application:
**15.05.85 Bulletin 85/20**

(45) Publication of the grant of the patent:
**06.04.88 Bulletin 88/14**

(84) Designated Contracting States:
**AT BE CH DE FR GB IT LI LU NL SE**

(56) References cited:
**DE-B-2 855 510**
**FR-A-2 420 565**
**FR-A-2 484 294**
**GB-A-1 567 129**
**US-A-3 843 457**

(73) Proprietor: **Van der Heijden, Iris D.P. Maria Paloma**
**Ulicotenseweg 47**
**B-2328 Meerle (BE)**

(72) Inventor: **Schippers, Wilhelmus J.H. Merlin, Schuivenoord 9**
**B-2328 Meerle, Hoogstraten (BE)**

(74) Representative: **van der Saag, Johannes et al**
**OCTROOIBUREAU VRIESENDORP & GAADE**
**P.O. Box 266**
**NL-2501 AW The Hague (NL)**

Courier Press, Leamington Spa, England.

## Description

The invention relates to a process for the disposal of domestic garbage, wherein domestic garbage (hereafter also indicated as domestic refuse) is dehydrated and homogenized, by compressing at a pressure of at least 15 MPa while removing the separated water (and dissolved substances), and subsequently is subjected to pyrolysis while recovering carbonaceous materials, metals and ceramics.

The invention also relates to an apparatus for the disposal of domestic garbage in a process as set out above, comprising a press for compressing domestic garbage to blocks under a pressure of at least 15 MPa followed, in the path of the garbage, by a pyrolysis oven.

Such a process and apparatus are disclosed in FR—A—2 484 294. According to this prior art process, domestic garbage (or similar material) is compressed to briquettes under a pressure of several hundreds of bars, a measure by which the loose refuse material is deformed (broken down) and thus homogenized and is dehydrated i.e. the excess of moisture (domestic refuse on the average contains about 30% of moisture, which is only partly absorbed in the refuse) is squeezed out, while the remaining moisture is distributed uniformly through the compressed refuse mass, · which is a result of this obtains thoroughly uniform properties. The dehydrated garbage briquettes thus obtained which still comprise uniformly distributed residual water and air are directly heated to a temperature between 600 and 1200°C for pyrolizing the garbage, thus liberating combustible gases and producing coke. The combustible gases formed are in practice combusted and also part of the coke is combusted, the hot flue gases being used for indirectly heating the garbage briquettes in the pyrolysis zone. Residual ash from the combustion comprising metals and ceramics is chilled in water and recovered. The overall result is that only coke and incombustible inorganic material (metal, glass) are recovered.

From New Scientist, March 4, 1982, page 574, a process for the disposal of domestic refuse is known, in which the inorganic fraction (iron and other materials, glass, stones, sand) is removed from the domestic refuse which has been divided into pieces of the same size, the remaining fraction which essentially consists of organic components is dried and, after separation of fibrous material is subjected to pyrolysis in a nitrogen atmosphere (anaerobic conditions) while supplying a slight amount of steam. After cooling the pyrolysis products, this results in oil with a combustion heat of the order of 40000 MJ/t, tar, a gas fraction and water.

The advantage of said process is that one gets rid of the domestic refuse, while, besides the inorganic components from the domestic refuse (metals, ceramics), one is also provided with an oil which has a considerably higher value than the organic domestic refuse fraction (upgraded waste), remaining after the removal of inorganic material, which has an average combustion heat of about 15000 MJ/t.

In order to render such a process applicable in practice, it should be cheap. This means that the various stages of such a process should be as efficient as possible.

It has now been found that a highly efficient and cheap process for the disposal of domestic garbage is obtained, if a process of the type disclosed in FR—A—2 484 204 is characterized in that the domestic garbage is further dried after the compression and before the pyrolysis, by exposing it in a space cut off from air supply to electromagnetic waves having a frequency between 300 MHz and 300 GHz, in that in the pyrolysis oil and carbonaceous materials are formed and are recovered and metals and ceramic (including vitreous) materials are separated by classification.

Why the above mentioned result appears when applying said method is not quite clear.

A possible explanation is, that the electromagnetic waves having a frequency between 300 MHz and 300 GHz (so called microwaves) heat the water which is homogeneously distributed in the moulded pieces of compressed domestic refuse by dielectric losses (dielectric heating) said water being evaporated and driven out from the domestic refuse at a temperature at which the refuse is not yet decomposed, and simultaneously because of its homogeneous distribution in the domestic refuse, entraining the oxygen throughout from the domestic refuse, while beside this also in the organic molecules, especially in the polar bonds thereof, because of dielectric losses changes take place, which render the organic material more sensitive to the conditions appearing during pyrolysis. The moisture as well as the oxygen are quickly driven out and dry, moulded pieces of domestic refuse are obtained, which are of anaerobic nature, and moreover easily decompose during the pyrolysis. It is essential for said result that the domestic refuse which is exposed to the electromagnetic vibrations, is pre-dried and homogenized by compression.

We remark, that it is known per se (vide U.S. patent specification 3 843 457 and U.S. patent specification 4 118 282) to pyrolyze domestic refuse under influence of electromagnetic waves having a frequency between 300 MHz and 300 GHz. The vibrations should effect a complete decomposition of the organic components of the domestic refuse while forming oil and carbonaceous (tarry) materials.

The domestic refuse in the prior art process is separated from inorganic materials and shredded and then directly passed through a pyrolysis zone where it is subjected to microwaves in the low GHz range (about 0.8—100 GHz).

However, in this prior art process the pyrolysis zone is brought under a reduced pressure (preferably 0.1 to 100 mmHg=13.3 Pa to 13.3 kPa and typically about 10 mmHg=1.33 kPa) and simultaneously a gas stream, which preferably has reactive species of gas, is passed through the pyrolysis zone.

That a good pyrolysis result can be obtained without applying a vacuum, if domestic refuse is first dehydrated and homogenized by compression, is further dried by exposition to electromagnetic waves of 300 MHz to 300 GHz and then pyrolyzed, cannot be derived from this prior art.

The water which is squeezed out during the compression stage of the process of the invention, generally contains a high percentage of dissolved substances, especially also organic substances and is suitable for subjection to waste water purification in a manner known per se.

The effect of further drying the dehydrated refuse in exposure to electromagnetic vibrations is optimum if the dehydrated and homogenized refuse is exposed to electromagnetic waves of 800—2000 MHz.

Suitable apparatus by which the exposure to electromagnetic radiation having a frequency between 300 MHz and 300 GHz, in particular 800—2000 MHz, can be effected, are so-called magnetron ovens and/or ionotron ovens.

Preferably according to the invention two or more of such ovens are applied through which the pre-dried domestic refuse is successively passed, by means of inlet and outlet sluices which prevent that atmospheric air comes in the ovens.

This offers the possibility to regulate the temperature profile in the domestic refuse, the humidity and the aerobic as well as anaerobic condition of the domestic refuse before the domestic refuse goes to the pyrolysis reactor.

Thus, the apparatus of the invention is characterized by one or more magnetron and/or ionotron ovens which generate vibrations of 300 $MH_2$—300 GHz and preferably of 800—2000 MHz, included in the path of the garbage between the press and the pyrolysis oven.

It is recommended, before exposing the domestic refuse to the electromagnetic vibrations having a frequency of 300 MHz—300 GHz, in particular 800—2000 MHz, to pre-heat the domestic refuse by means of contact with a hot fluid. For, when exposing it to electromagnetic vibrations having a frequency of 300 MHz—300 GHz, heating takes place in the pieces of compressed domestic refuse, so that the temperature, in particular inside the pieces of domestic refuse increases. When pre-heating with a hot fluid heating takes place from outside to inside. By applying both methods of heating, one obtains that the pieces of domestic refuse obtain a highly uniform temperature, which will benefit the drying and driving out of oxygen.

Preferably said pre-heating takes place with the heat which was generated during the compression of the domestic refuse. This heat can suitably be transferred to the domestic refuse by means of the hydraulic oil which is used in the press. In this way no extra energy is necessary for the pre-heating.

The dry domestic refuse which has been brought into substantially anaerobic condition, is subsequently brought in a pyrolysis oven of a usual construction, in which it is passed through a plurality of tubes, which are heated from the outside, e.g. by means of hot gases or by means of radiation heating, while the temperature of the domestic refuse, which in the magnetron and/or ionotron ovens arrives at about 120—200°C, increases to 350—600°C. At said temperature the organic components are decomposed while forming a gas or vapour stream, which is exhausted and condensed, while an oil phase is formed with dispersed therein heavier carbonaceous components.

By settling the oil phase for some time, preferably at least 12 hours, the heavy carbonaceous components are removed and are recovered as a separate product.

The domestic refuse which is subjected to the treatment according to the invention can first be freed from the inorganic phase, as is usual per se, e.g. from U.S.—A—3,843,457.

However in the process according to the invention it is preferred to carry out the dehydration and homogenisation by compression, further drying, optionally pre-heating of the compressed domestic refuse and the pyrolysis with complete domestic refuse which has not been separated into fractions. The inorganic phase which thus also undergoes the successive process steps and in particular the metal components in the domestic refuse, then act as heat-conductor, which leads to uniform heating of the domestic refuse. In the pyrolysis reactor the metals provide a solid residue and the ceramic components (glass) form a melt which when cooled is solidified and decomposes into a granular mass. The metals and the granular, ceramic mass can be removed much easier from the residue of the pyrolysis reactor, than from the initial domestic refuse.

## Claims

1. Process for the disposal of domestic garbage, wherein domestic garbage is dehydrated and homogenized, by compressing at a pressure of at least 15 MPa while removing the separated water and dissolved substances and subsequently is subjected to pyrolysis while recovering carbonaceous materials, metals and ceramics characterized in that the domestic garbage is further dried after the compression and before the pyrolysis, by exposing it in a space cut off from air supply to electromagnetic waves having a frequency between 300 MHz and 300 GHz and in that in the pyrolysis oil and carbonaceous materials are formed and are recovered and metals and ceramic (including vitreous) materials are separated by classification.

2. Process according to claim 1, characterized in that the compressed domestic garbage is exposed to electromagnetic waves of 800—2000 MHz.

3. Process according to claim 1 or 2, characterized in that the compressed domestic garbage is passed through two or more magnetron and/or ionotron ovens.

4. Process according to one of the preceding claims, characterized in that the domestic garbage after being dehydrated and homogenized by compression is heated, before being subjected to the electromagnetic waves.

5. Process according to claim 4, characterized in that said heating takes place by means of heat which is generated during the compression of the garbage.

6. Process according to claim 5, characterized in that the heat is transferred by means of the hydraulic oil of the press used for the compression.

7. Process according to one of the preceding claims, characterized in that dehydration and homogenizing by compression, further drying, optionally preheating of the compressed domestic garbage and the pyrolysis are carried out with complete, unsorted garbage and also metals and vitreous and/or cement-like materials are recovered separately from the residue of the pyrolysis-reaction.

8. Apparatus for the disposal of domestic garbage in a process as set out in any one of the preceding claims, comprising a press for compressing domestic garbage to blocks under a pressure of at least 15 MPa followed in the path of the garbage by a pyrolysis oven, characterized by one or more magnetron and/or ionotron ovens which generate vibrations of 300 MHz—300 GHz, included in the path of the garbage between the press and the pyrolysis oven.

9. Apparatus according to claim 8, characterized in that the magnetron and/or ionotron ovens generate vibrations of 800—2000 MHz.

**Patentansprüche**

1. Verfahren zum Beseitigen von Hausmüll, wobei der Hausmüll unter Zusammenpressung bei einem Druck von wenigstens 15 MPa entwässert und homogenisiert wird, und das ausgeschiedene Wasser und die gelösten Substanze entfernt werden und demnächst der Müll der Pyrolyse unter Gewinnung von kohlenstoffhaltigen Materialen, Metallen und keramischen Materialen ausgesetzt wird, dadurch gekennzeichnet, dass der Hausmüll nach der Zusammenpressung und vor der Pyrolyse weiter getrocknet wird, indem er in einem von Luftzufuhr abgeschlossenen Raum elektromagnetischen Wellen mit einem Frequenz zwischen 300 MHz und 300 GHz ausgesetzt wird und dass in der Pyrolyse Oel und kohlenstoffhaltige Materiale gebildet und gewonnen werden und Metalle und keramische Materiale (einschliesslich glasartiger Materiale) mittels Klassifikation ausgeschieden werden.

2. Verfahren nach Anspruch 1, dadurch gekennzeichnet, dass der zusammengepresste Hausmüll elektromagnetischen Wellen von 800—2000 MHz ausgesetzt wird.

3. Verfahren nach Anspruch 1 oder 2, dadurch gekennzeichnet, dass der zusammengepresste Müll durch zwei oder mehrere Magnetron- und/oder Ionotronöfen geführt wird.

4. Verfahren nach einem der vorhergehenden Ansprüche, dadurch gekennzeichnet, dass der Hausmüll nach der Entwässerung und Homogenisierung mittels Zusammenpressung erwärmt werden, bevor er elektromagnetischen Wellen ausgesetzt wird.

5. Verfahren nach Anspruch 4, dadurch gekennzeichnet, dass diese Erwärmung mit der während der Zusammenpressung des Mülls erzeugten Wärme erfolgt.

6. Verfahren nach Anspruch 5, dadurch gekennzeichnet, dass die Wärme mittels des hydraulischen Oels der zur Zusammenpressung des Hausmülls benutzten Presse übertragen wird.

7. Verfahren nach einem der vorhergehenden Ansprüche, dadurch gekennzeichnet, dass die Entwässerung und Homogenisierung durch Zusammenpressung, weiteres Trocknen, gegebenenfalls Vorerhitzung des zusammengepressten Hausmülls und die Pyrolyse mit vollständig unsortiertem Müll ausgeführt werden und aus dem Residuum der Pyrolysereaktion auch Metalle und glasartige und/oder zementartige Materiale einzeln gewonnen werden.

8. Anlage zum Beseitigen von Hausmüll in einem Verfahren wie beschrieben in irgendeinem der vorhergehenden Ansprüche, welche auf dem Wege des Mülls eine Presse für die Zusammenpressung von Hausmüll zu Blocken bei einem Druck von wenigstens 15 MPa enthält und danach einen Pyrolyse-Ofen, gekennzeichnet durch eine oder mehrere Magnetron- und/oder Ionotronöfen, welche Öfen Vibrationen von 300 MHz bis zum 300 GHz erzeugen auf dem Wege des Mülls zwischen der Presse und dem Pyrolyseofen.

9. Anlage nach Anspruch 8, dadurch gekennzeichnet, dass die Magnetron- und/oder die Ionotronöfen Vibrationen von 800—2000 MHz erzeugen.

**Revendications**

1. Procédé d'écartement d'ordures ménagères, selon lequel les ordures ménagères sont deshydratées et homogénéisées, en les comprimant sous une pression d'au moins 15 MPa, l'eau séparée et les substances dissouses étant éliminées, et les ordures ménagères étant ensuite soumises à une pyrolyse en récupérant les matières carbonées, les métaux et les céramiques, caractérisé en ce que les ordures ménagères sont soumises à un séchage ultérieur, après la compression et avant la pyrolyse, en les exposant, dans un espace hermétiquement fermé à l'air, à des ondes électro-magnétiques ayant une fréquence comprise entre 300 MHz et 300 GHz, et en ce que l'huile et les matières carbonées formées lors de la pyrolyse sont récupérées et les métaux et matières céramiques (y compris les matières vitreuses) sont séparées par classification.

2. Procédé selon la revendication 1, caractérisé en ce que les ordures ménagères comprimées sont exposées à des ondes électromagnétiques de 800—2000 MHz.

3. Procédé selon la revendication 1 ou 2, caractérisé en ce que les ordures ménagères comprimées sont conduites à travers deux ou plusieurs fours magnétrons et/ou ionotrons.

4. Procédé selon l'une quelconque des revendications précédentes, caractérisé en ce que les ordures ménagères, après avoir été deshydratisées et homogénéisées par compression, sont chauffées avant d'être soumises à des ondes électromagnétiques.

5. Procédé selon la revendication 4, caractérisé en ce que ledit chauffage s'effectue au moyen de la chaleur développée en comprimant les ordures.

6. Procédé selon la revendication 5, caractérisé en ce que la chaleur est transférée par l'huile hydraulique de la presse utilisée pour la compression.

7. Procédé selon l'une quelconque des revendications précédentes, caractérisé en ce que la déshydration et la homogénéisation par compression, le séchage ultérieur, l'éventuel préchauffage des ordures ménagères comprimées et la hydrolyse s'effectuent avec des ordures complètes et non-triées, et en ce que des métaux et matières vitreuses et/ou cimenteuses sont également récupérés séparément à partir du résidu de la réaction de pyrolyse.

8. Dispositif d'écartement d'ordures ménagères selon un procédé défini par l'une quelconque des revendications précédentes, comportant une presse pour comprimer les ordures ménagères en blocs, sous une pression d'au moins 15 MPa, et ensuite un four de pyrolyse, caractérisé en ce qu'il est prévu un ou plusieurs fours magnétrons et/ou ionotrons générant des vibrations de 300 MHz—300 GHz, disposés entre la presse et le four de pyrolyse.

9. Dispositif selon la revendication 8, caractérisé en ce que les fours magnétrons et/ou ionotrons génèrent des vibrations de 800—2000 MHz.